# EUROPEAN PATENT APPLICATION

(11) **EP 4 270 185 A1**
(43) Date of publication of application: **01.11.2023**
(21) Application number: 22170846.4
(22) Date of filing: 29.04.2022
(51) Int. Cl.: G06F 9/451, G06F 21/10

(54) **METHOD, APPARATUS AND COMPUTER PROGRAM PRODUCT FOR AUGMENTING A COMPUTER PROGRAM WITH MEDIA CONTENT**

(71) Applicant: Utopia Music AG, 6300 Zug (CH)
(72) Inventor: Wahlgren, Linus, 6300 Zug (CH); Flach, Max, 6300 Zug (CH); Kincy, Trevor, 6300 Zug (CH)
(74) Representative: MERH-IP Matias Erny Reichl Hoffmann Patentanwälte PartG mbB

(57) **Abstract**

A method, apparatus, and computer program product for augmenting a computer program with media content. The method comprises: executing (200), by a client apparatus, a client application program; detecting (202) a status of the client application program; generating (204) a media content request based on the status of the client application program; obtaining (206), by the client apparatus, media content based the media content request; and causing the client apparatus to output (208) the media content via a user interface during executing the client application program.

## Description

### FIELD

Various embodiments relate to a method, apparatus, and computer program product for augmenting a computer program with media content.

### BACKGROUND

Computer programs, such as video games, are traditionally selfstanding, i.e. they contain all the content required for executing the computer program embedded in the computer program distributable.

Music in video games currently usually consists of a predetermined list of tracks embedded in the game bundle with the licenses for this music preacquired before game distribution.

A license for the use of certain music often comes with conditions on how it can be used and also often an expiration date. If the license expires or the terms are broken then the media content needs to be removed from the application, and the game from the market. If the media is embedded into the game files then a manual update needs to be created and distributed in order to remove the content which is slow and costly.

A video game may quickly become out-of-date as the content, such as supporting media files, may become less relevant and potentially expire with time. It may not be possible to prepare for all possible future scenarios when developing the video game, and it could also be very costly to do so e.g. by including more content than is necessary at the time of the release of the video game. The performance of the video game and the size of the executable could also suffer. Manual updates allow for updating the video game and its content, but they may require shipping and installation of a new executable.

There is a need to develop solutions that alleviate some of the above-mentioned issues.

### BRIEF DESCRIPTION

The present disclosure provides a method for augmenting a computer program with media content, the method comprising executing, by a client apparatus, a client application program; detecting a status of the client application program; generating a media content request based on the status of the client application program; obtaining, by the client apparatus, media content based the media content request; and causing the client apparatus to output the media content via a user interface during executing the client application program.

According to another aspect of the disclosure, the generating is performed by the client apparatus, and the obtaining comprises: sending, by the client apparatus, the media content request to a server apparatus; and receiving, by the client apparatus, the media content from the server apparatus.

According to another aspect of the disclosure, the method may further comprise obtaining, by the client apparatus, one or more labels related to the status of the client application program, wherein the one or more labels related to the status of the client application program are included in the media content request; retrieving, by the server apparatus, media content related to the one or more labels; and transmitting, by the server apparatus, the retrieved media content to the client apparatus.

According to another aspect of the disclosure, the method may further comprise generating a media content set comprising one or more media content items; associating the media content set with the one or more labels; and selecting the media content from the media content set associated with the one or more labels included in the media content request.

According to another aspect of the disclosure, the method may further comprise obtaining, by the server apparatus, a license associated with a media content item of the media content set; determining, by the server apparatus, whether the license is valid; and if the license is determined invalid, excluding, by the server apparatus, the media content item from the media content set.

According to another aspect of the disclosure, the method may further comprise obtaining a media content identifier related to the status of the client application program, wherein the media content identifier is included in the media content request; attempting to retrieve, by the server apparatus, first media content related to the media content identifier, and to transmit, by the server apparatus, the first media content to the client apparatus.

According to another aspect of the disclosure, the method may further comprise: if the server apparatus fails to retrieve the first media content: obtaining, by the server apparatus, one or more labels associated with the media content identifier; retrieving, by the server apparatus, second media content associated with the one or more labels associated with the media content identifier; and transmitting, by the server apparatus, the second media content to the client apparatus.

According to another aspect of the disclosure, the method may further comprise obtaining, by the server apparatus, a license associated with the media content identifier included in the media content request; determining, by the server apparatus, whether the license is valid; and if the license is determined invalid, failing retrieving the first media content.

According to another aspect of the disclosure, the method may further comprise detecting a programmatic event during executing the client application program, wherein the programmatic event indicates a change in the status of the client application program; and triggering generating the media content request, obtaining the media content, and causing the client apparatus to output the media content based on the programmatic event.

According to another aspect of the disclosure, the method may further comprise detecting the status of the client application program after detecting the programmatic event.

According to another aspect of the disclosure, the method may further comprise obtaining an execution sequence of the client application program, wherein the detecting comprises predicting the programmatic event on the basis of the execution sequence.

According to another aspect of the disclosure, the method may further comprise storing the media content on the client apparatus only in a volatile memory.

The present disclosure also provides a client apparatus for augmenting a computer program with media content, the client apparatus comprising one or more processors and one or more memories including computer program code, the one or more memories and the computer program code configured to with the one or more processors, cause the client apparatus at least to perform: executing a client application program; detecting a status of the client application program; generating a media content request based on the status of the client application program; obtaining media content based the media content request; and causing the client apparatus to output the media content via a user interface during executing the client application program.

The present disclosure further provides a system comprising the server apparatus and the client apparatus.

The present disclosure further provides a computer program product readable by a computer and comprising program instructions which, when executed by the computer, cause the computer to carry out a computer process comprising: executing a client application program; detecting a status of the client application program; generating a media content request based on the status of the client application program; obtaining media content based the media content request; and causing the computer to output the media content via a user interface during executing the client application program.

One or more examples of implementations are set forth in more detail in the accompanying drawings and the description of embodiments.

### LIST OF DRAWINGS

Some embodiments will now be described with reference to the accompanying drawings, in which
FIG. 1 illustrates embodiments of an apparatus and a system as a block diagram;
FIG. 2 illustrates embodiments of a method for augmenting a computer program;
FIG. 3 illustrates providing protected media content as a signal sequence diagram;
FIG. 4 illustrates embodiments of the method and system;
FIG. 5 illustrates embodiments of the method as a block diagram;
FIG. 6 illustrates embodiments related to obtaining media content;
FIG. 7 illustrates embodiments related to one or more labels;
FIG. 8 and FIG. 9 illustrate embodiments related to a media content set;
FIG. 10 illustrates embodiments related to a media content identifier and fallback operations;
FIG. 11 illustrates embodiments related to a license;
FIG. 12 illustrates embodiments related to a programmatic event; and
FIG. 13 illustrates embodiments of an apparatus as a block diagram.

### DESCRIPTION OF EMBODIMENTS

The following embodiments are only examples. Although the specification may refer to "an" embodiment in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

Reference numbers, both in the description of the embodiments and in the claims, serve to illustrate the embodiments with reference to the drawings, without limiting it to these examples only.

The embodiments and features, if any, disclosed in the following description that do not fall under the scope of the independent claims are to be interpreted as examples useful for understanding various embodiments of the invention.

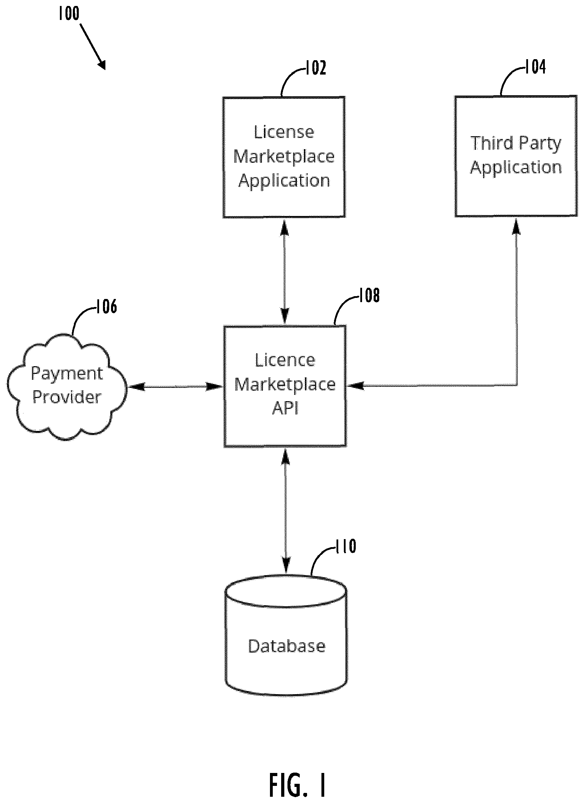

With reference to FIG. 1, a license marketplace application programming interface (API) 108 facilitates augmenting a computer program. The licence marketplace API communicate with a licence marketplace application 102 and/or a third party application 104. Additionally, the licence marketplace API communicate with a payment provider 106 and/or database 110. The communication between 102, 104, 106, 108, and/or 110 may be wired and/or wireless communication.

In the followings, the parties involved in the system of FIG. 1 may include media content producers, application developers, and application users. Media content providers create, produce and/or own the media content. The media content producers may hold immaterial rights, such as copyrights, for the media content. It may be in the media content producers' interest to enforce these rights, but also to provide, i.e. license, the media content to a wider audience for a reasonable compensation. Application developers create applications, i.e. computer programs, and they may wish to embed media content to the applications. Application users use the applications created by the application developers. The application users may be the end consumers of the media content.

The media content producers may make their media content available via the license marketplace application 102. Application developers may obtain media content via the license marketplace application 102 for use in third party application(s) (computer program(s)) 104 developed by the application developers. The application users of the third party application(s) 104 may consume the media content via the third party application(s) 104. The license marketplace API 108 may coordinate some or all of the above-mentioned functionalities.

Media content as referred to herein may include audio, such as music, images, video, or any other type of media content. The application (computer program or client application program) that the media content may be provided to may be a video game, video game engine, advertisement, movie, music streaming platform, video streaming platform, or disc jockey (DJ) application, for example.

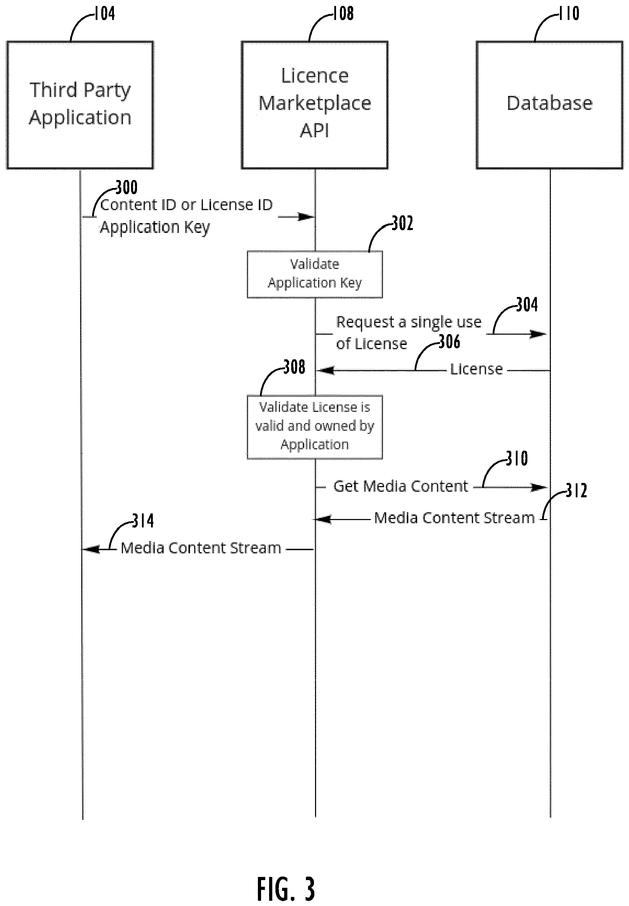

FIG. 3 illustrates providing protected media content as a signal sequence diagram. In 300, a client apparatus or the third party application 104 sends a media content request to the server apparatus or the license marketplace API 108. The media content request may comprise a media content identifier, and an application key of the client application program (i.e. the third party application 104). Additionally or alternatively to the media content identifier, the media content request may comprise a license identifier.

In 302, the server apparatus validates the application key. The server apparatus may compare the application key to one or more application keys stored in the database 110. If the application key matches one of the one or more application keys stored in the database 110, the server apparatus may request a license related to the media content identifier and the application key. In 304, the server apparatus may request a single use license or a single use of a license for the media content. Alternatively or additionally, the server apparatus may request another kind of license, such as a multiple-use license or a perpetual license.

If the license is found in the database 110, it may be received by the server apparatus in 306. The server apparatus may then validate the license. In 308, the validating may verify that the license is valid (e.g. it has not been disabled in the database), and that the license is owned by the application whose application key was provided in 300. Ownership of the license may be stored in the database 110, e.g. as a relationship between the license and the application key.

If the validating succeeds, the server apparatus may retrieve data related to the media content and transmit the data to the client apparatus. The data related to the media content may comprise the media content. In 310, the server apparatus may request the media content from the database 110. In 312, the media content may be provided from the database to the server apparatus as a media content stream. In 314, the server apparatus may transmit the media content to the client apparatus as a media content stream.

Further details related to the systems and methods illustrated in FIG. 1 and FIG. 3 are disclosed in the applicant's co-pending European patent application filed simultaneously with this patent application on 29.4.2022, titled "Method, apparatus, and computer program product for providing protected media content", which is incorporated herein by reference in its entirety.

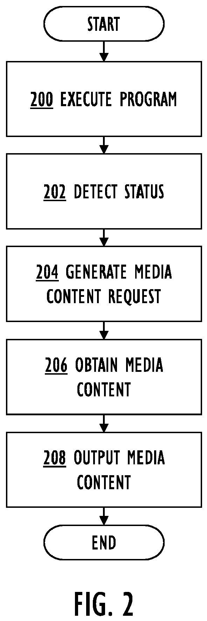

Let us now simultaneously discuss embodiments of a method, an apparatus, and a system for augmenting a computer program. With reference to FIG. 2, a method for augmenting a computer program comprises executing 200, by a client apparatus, a client application program; detecting 202 a status of the client application program; generating 204 a media content request based on the status of the client application program; obtaining 206, by the client apparatus, media content based the media content request; and causing the client apparatus to output 208 the media content via a user interface during executing the client application program.

Technical effects of the solution include augmenting the client application program with the media content. The present solution further allows for augmenting the client application program with different media content at different times and/or locations, for example. Effectively the lifetime of the client application program may be prolonged without the need to plan, build and ship a new version of the client application program. The amount of storage space the client application program requires may be reduced. The client application program executable may be much smaller which makes distribution easier and may reduce the time it takes for an end user to be able to use the client application program.

The client apparatus executes the client application program and detects the status of the client application program. The status may refer to computer processing caused by the client application program. For example, the status may be that the client application program is causing one or more processors and/or user interface to render an image, background, environment or animation on the user interface. The status may be detected based on e.g. computer program code of the client application program, and/or a task queue, a job queue, or a command queue of the client apparatus, for example. A media content request is generated to obtain media content by the client apparatus. Once obtained, the client apparatus outputs the media content via a user interface during execution of the client application program.

The client apparatus may perform one or more of the detecting, generating, obtaining, and causing. Alternatively or additionally, the server apparatus may perform one or more of the detecting, generating, obtaining, and causing. The server apparatus may monitor the status of the client application program e.g. in a scenario where the client application program is an online video game that is in communication with the server apparatus during execution of the client application program. Alternatively or additionally, the client apparatus may send the status of the client application program or the media content request to the server apparatus, for example.

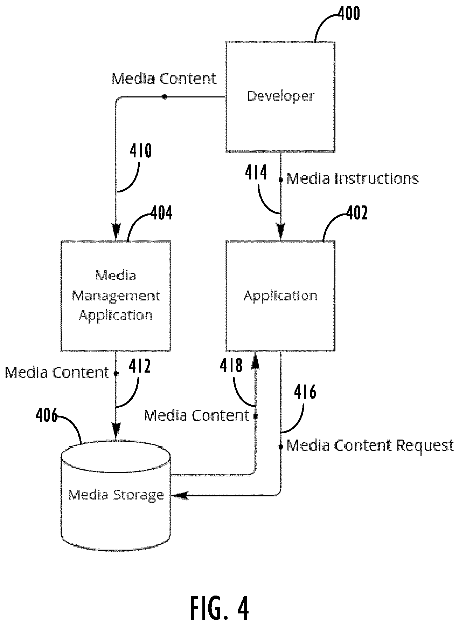

FIG. 4 illustrates embodiments of the method and system. An application developer may upload or select media content 410 for the client application program they may have developed. In the first case, the application developer may act as a media content producer. An application developer apparatus 400 may communicate with the server apparatus 404. The server apparatus 404 may execute a media management application. The media management application may be the license marketplace application 102 or the license marketplace API 108. The server apparatus may communicate with database 406. The server apparatus and/or database 406 may be configured to store media content 412 in the database 406.

The client application program executing on client apparatus 402 may comprise media instructions 414. The instructions may be programmed to the client application program by the application developer, or they may accompany the client application program e.g. as an external configuration file. The media instructions may include rules and/or configurations for executing at least a part of the method of FIG. 2 or any of its embodiments. The client apparatus may send the media content request 416 to the server apparatus. The server apparatus may comprise the database 406, and the client apparatus may send the media content request directly to the database or a database interface for accessing the database. The server apparatus may retrieve media content corresponding to the media content request and transmit the media content 418 to the client apparatus.

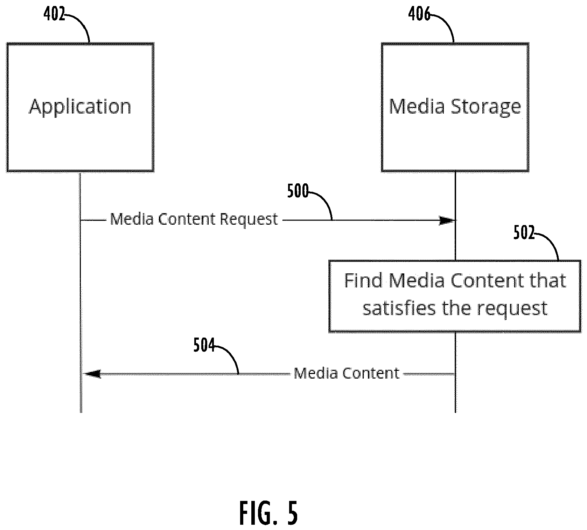

FIG. 5 illustrates embodiments wherein the client apparatus 402 communicates with the database 406. The server apparatus may comprise or be communicatively coupled to the database. The client apparatus may send the media content request 500 to the database or the server apparatus. The database and/or the server apparatus may search 502 for media content to satisfy the media content request. For example, the server apparatus may query the database for media content on the basis of the media content request. If found, the server apparatus and/or database may transmit the media content 504 to the client apparatus.

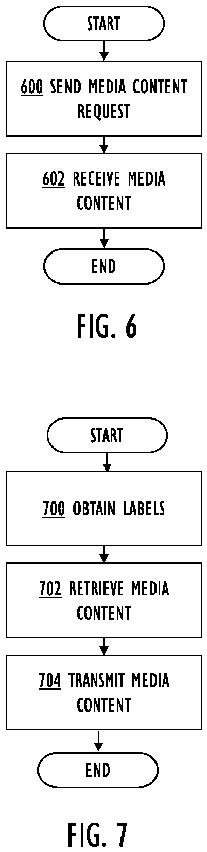

FIG. 6 illustrates embodiments related to obtaining media content. In an embodiment, the generating is performed by the client apparatus, and the obtaining comprises: sending 600, by the client apparatus, the media content request to a server apparatus; and receiving 602, by the client apparatus, the media content from the server apparatus. The server apparatus may retrieve the media content (e.g. from the database configured to store the media content) and transmit the media content to the client apparatus e.g. as described in relation to FIG. 3.

FIG. 7 illustrates embodiments related to one or more labels. In an embodiment, the method further comprises: obtaining 700, by the client apparatus, one or more labels related to the status of the client application program, wherein the one or more labels related to the status of the client application program are included in the media content request; retrieving 702, by the server apparatus, media content related to the one or more labels; and transmitting 704, by the server apparatus, the retrieved media content to the client apparatus. The client apparatus may generate the media content request such that the one or more labels related to the status of the client application program are included in the media content request. The client apparatus may receive the media content transmitted by the server apparatus. The client apparatus may then output the receiver media content via the user interface.

The one or more labels may be stored e.g. in a memory of the client apparatus. The one or more labels may represent the status of the client application program. The client apparatus may select the one or more labels (e.g. from the memory) on the basis of the status of the client application program. The client apparatus may use the media instructions 414 in selecting the one or more labels.

The one or more labels may represent mood, tempo, setting, feel, artist, and/or song name, for example. The one or more labels may be text strings. For example, when client application program is a video game, the status of the client application program may be rendering a cave environment. In this case, the one or more labels may be "Eerie", "Cave", "Background", "Soundtrack", for example. The server apparatus may search the database using the one or more labels and retrieve media content related to the one or more labels.

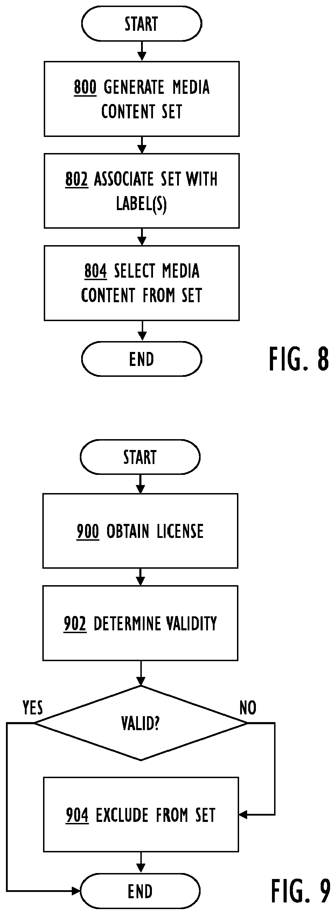

FIG. 8 and FIG. 9 illustrate embodiments related to a media content set. In an embodiment, the method further comprises: generating 800 a media content set comprising one or more media content items; associating 802 the media content set with the one or more labels; and selecting 804 the media content from the media content set associated with the one or more labels included in the media content request. The generating 800, associating 802, and/or selecting 804 may be performed by the server apparatus, client apparatus, or application developer apparatus, for example.

The application developer may wish to have the media content set generated in advance to have more control over the media content that is output by the client apparatus during execution of the client application program. The application developer may control the generating 800 using e.g. the media management application and/or a user interface configured to control the generating. The user interface may be a user interface or the server apparatus or the application developer apparatus, for example.

The media content set may be stored in the database 110 or 406. Storing the media content set may be implemented by storing a media content set identifier and relationships between the media content set identifier and the one or more media content items in the database, for example.

As an example, the media content set may comprise one or more audio tracks that comprise music. The one or more labels associated with the media content set may be "Forest background music". The status corresponding to the one or more labels may be that the client application program is rendering a forest background, for example. The media content obtained and output by the client apparatus may be selected from the one or more audio tracks comprised in the media content set.

In an embodiment, the method further comprises: obtaining 900, by the server apparatus, a license associated with a media content item of the media content set; determining 902, by the server apparatus, whether the license is valid; and if the license is determined invalid, excluding 904, by the server apparatus, the media content item from the media content set.

The server apparatus may obtain the license from the database 110 and validate, or determine whether or not the license is valid, as described in the context of FIG. 3. If the server apparatus determines that the license is invalid, the server apparatus may exclude the media content item from the media content set. The excluding may be performed by deleting a relationship between a media content item and the media content set (identifier) stored in the database, for example. Media content for which the client application program no longer has a valid license may therefore be excluded, leading to possible memory savings and enforcement of the license holder's rights.

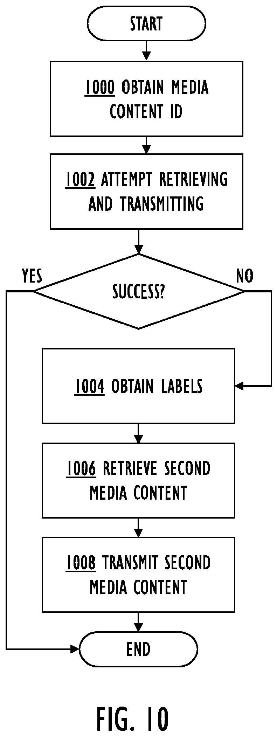

FIG. 10 illustrates embodiments related to a media content identifier and fallback operations. In an embodiment, the method further comprises: obtaining 1000 a media content identifier related to the status of the client application program, wherein the media content identifier is included in the media content request; attempting 1002 to retrieve, by the server apparatus, first media content related to the media content identifier, and to transmit, by the server apparatus, the first media content to the client apparatus.

The obtaining may be performed by the client apparatus, for example. The media content identifier may be obtained e.g. on the basis of the media instructions. The client apparatus may include the media content identifier in the media content request. The server apparatus may attempt to retrieve first media content related to the media content identifier e.g. from the database. However, it may be that such media content cannot be found in the database, and the retrieving fails. If the first media content corresponding to the media content identifier is found (e.g. in the database), the server apparatus may transmit the first media content to the client apparatus for outputting via the user interface.

In an embodiment, the method further comprises: if the server apparatus fails to retrieve the first media content: obtaining 1004, by the server apparatus, one or more labels associated with the media content identifier; retrieving 1006, by the server apparatus, second media content associated with the one or more labels associated with the media content identifier; and transmitting 1008, by the server apparatus, the second media content to the client apparatus.

The one or more labels associated with the media content identifier may be stored in the database. Alternatively or additionally, the one or more labels associated with the media content identifier may be included in the media content request. The one or more labels may be "Forest background music", for example. The server apparatus may search the database for the one or more labels to retrieve the second media content, e.g. a song tagged or associated with the label(s) "Forest background music". The server apparatus may transmit the second media content to the client apparatus for outputting via the user interface.

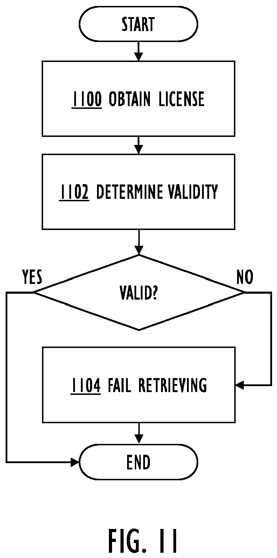

FIG. 11 illustrates embodiments related to a license. In an embodiment, the method further comprises: obtaining 1100, by the server apparatus, a license associated with the media content identifier included in the media content request; determining 1102, by the server apparatus, whether the license is valid; and if the license is determined invalid, failing 1104 retrieving the first media content.

The server apparatus may obtain the license from the database 110 and validate or determine whether or not the license is valid as described in the context of FIG. 3. If the server apparatus determines that the license is invalid, the server apparatus may not retrieve the first media content. In this case, the second media content may be retrieved instead, for example.

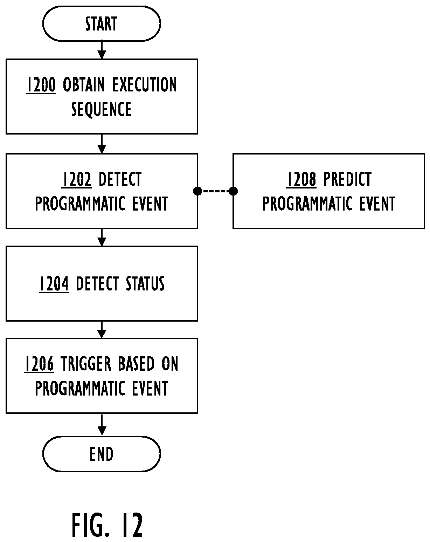

FIG. 12 illustrates embodiments related to a programmatic event. In an embodiment, the method further comprises: detecting 1202 a programmatic event during executing the client application program, wherein the programmatic event indicates a change in the status of the client application program; and triggering 1206 sending the media content request, receiving the media content, and causing the client apparatus to output the media content based on the programmatic event. The detecting and triggering may be performed by the client apparatus and/or the server apparatus, for example.

The programmatic event may be an event generated by execution of the client application program. The event may refer to a change in computer processing caused by the client application program. For example, the event may be that the client application program causes the one or more processors and/or user interface to begin or stop rendering an image, background, environment, or animation on the user interface. The programmatic event may refer to an event raised by computer program code of the client application program. For example, when the client application program is a video game, an "attack" event may be raised by the client application program when a playable character or a nonplayable character (NPC) attacks a player's (e.g. user of the client apparatus) character in the video game. The attack event may be detected e.g. by the client apparatus. The status of the client application program prior to the attack event may be characterized with the label "calm", for example. The attack event may lead to a change in the status to one with the label "intense", for example. New media content may therefore be required for outputting via the user interface as a result of the changed status. The triggering allows for obtaining said media content as described in relation to FIG. 2.

Programmatic events may be raised by the computer program code of the client application program. The client apparatus may detect the event(s) using e.g. try-catch-blocks or equivalents that may differ depending on the programming language used. The try-catch blocks or equivalents may be implemented in the computer program code of the client application program and/or a computer program product, for example.

In an embodiment, the method further comprises detecting 1204 the status of the client application program after detecting the programmatic event. For example, when the client application program is a video game, a scenario wherein the player is walking in a calm forest and the client apparatus is outputting a song that is associated with labels "calm" and "forest". If the player is then attacked in the game, a song related to the labels "intense" and "forest" could be output by the client apparatus. As the attack event does not affect the "forest" feature of the status of the client application program, detecting the status as still being related to "forest" and newly related to "intense" allows for obtaining more suitable media content to be output by the client apparatus.

In an embodiment, the method further comprises: obtaining 1200 an execution sequence of the client application program, wherein the detecting comprises predicting 1208 the programmatic event on the basis of the execution sequence. The execution sequence may be obtained from the computer program code of the client application program, and/or a task queue, a job queue, or a command queue of the client apparatus, for example. The obtaining and predicting may be performed by the client apparatus and/or the server apparatus, for example.

In an example, the client application program is a rhythm game. The client application program code may define a series of events. An example event is outputting a rock song while receiving user inputs from the user interface. The user inputs may be related to the player playing the rhythm game. The execution sequence may comprise the above example event, which may be predicted on the basis of the execution sequence. The client apparatus may therefore acquire the media content (rock song) in advance to be output at the time of the event.

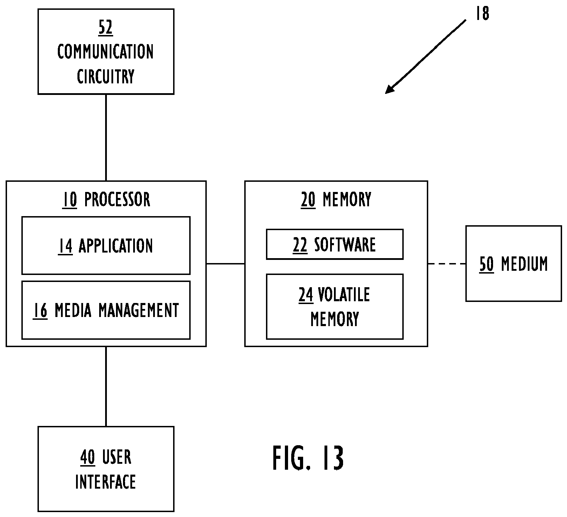

FIG. 13 illustrates embodiments of an apparatus or part of a system as a block diagram. A system for augmenting a computer program comprises the client apparatus 18 and the server apparatus. In an embodiment, the system further comprises the content producer apparatus and/or the application developer apparatus.

The apparatus of FIG. 13 may be the client apparatus, the server apparatus, the content producer apparatus, or the application developer apparatus, for example. The apparatus of FIG. 13 may comprise one or more processors 10 and one or more memories 20 including computer program code 22, the one or more memories and the computer program code configured to with the one or more processors, cause the apparatus at least to perform the method of FIG. 2, or any one of the embodiments thereof. The computer program code may comprise the client application program or a part of the client application program, such as a game engine.

The apparatus may further comprise a user interface 40 comprising a display screen or another display unit, an input device such as one or more buttons and/or a touch-sensitive surface, and an audio output device such as a loudspeaker. When the apparatus is the client apparatus, the apparatus may output the media content via the user interface. When the apparatus is the content producer apparatus or the application developer apparatus, the user interface may output a media management application user interface for receiving user inputs from the content producer(s) or application developer(s) to trigger actions performed by the media management application. For example, the media management application user interface may provide information on available media content and licenses. The media management application user interface may provide functionalities for adding media content and licenses for media content providers, and functionalities for acquiring media content licenses and selecting media content for use in applications for application developers, for example.

When the apparatus is the client apparatus, the processor may comprise a client application program circuitry 14 configured to cause execution 200 of the client application program. The client application program circuitry may be configured to cause performance of the third party application 104. The processor may comprise a media management circuitry configured to perform at least some of the steps of the procedure of FIG. 2, or any one of the embodiments thereof. For example, the media management circuitry may be configured to perform steps 202, 204, 206, and/or 208.

When the apparatus is the server apparatus, the processor 10 may comprise a media management application circuitry configured to perform at least some of the steps of the procedure of FIG. 2, or any one of the embodiments thereof. The media management application may be configured to cause performance of the media management application. The server apparatus may comprise a user interface configured to control the media management application.

The apparatus may comprise a communication circuitry 52 connected to the processor 10. The communication circuitry may comprise a radio modem and appropriate radio circuitries for establishing a communication connection between e.g. the server apparatus and the client apparatus. Suitable radio protocols may include IEEE 802.11-based protocols, cellular communication protocols, and the Bluetooth^{®} communication protocol. The processor 10 may use the communication circuitry 52 to transmit and receive frames or data according to the supported wireless communication protocol. The frames may carry a payload data comprising the media content and/or media content request, for example. In some embodiments, the processor 10 may use the communication circuitry 52 to transmit the media content request to the server apparatus, or the media content to the client apparatus, for example.

The memory 20 may store a computer program product 22 defining computer program instructions for carrying out the method of FIG. 2 or any one of the embodiments thereof. The memory may comprise a volatile memory. In an embodiment, the method further comprises: storing the media content on the client apparatus only in a volatile memory 24. Volatile or transitory memory refers to memory that requires power to retain information stored in the memory. If the power is interrupted, the information is lost from the memory. This enhances protection of the media content, as the volatile memory does not permanently store the media content on the client apparatus. The client apparatus may comprise the volatile memory.

The memory may further comprise a database configured to store media content and licenses. The database may correspond to the database 110 of FIG. 1 and/or the database 406 of FIG. 4.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s) or software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

In an embodiment, at least some of the processes described in connection with FIG. 2 may be carried out by a system comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, and circuitry. In an embodiment, the at least one processor, the memory, and the computer program code form processing means or comprises one or more computer program code portions for carrying out one or more operations according to any one of the embodiments of the method of FIG. 2 or operations thereof.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Embodiments as described may also be carried out in the form of a computer process defined by a computer program or portions thereof. Embodiments of the methods described in connection with FIG. 2 may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium 50 readable by a computer or a processor. The computer program medium may be, for example but not limited to, a record medium, computer memory, read-only memory, electrical carrier signal, telecommunications signal, and software distribution package, for example. The computer program medium may be a non-transitory medium. Coding of software for carrying out the embodiments as shown and described is well within the scope of a person of ordinary skill in the art.

Thanks to the disclosure, it is advantageously possible to use a media storage solution hosting all available music along with metadata describing the genre, setting, tempo and any other information the game can continuously update its game assets. By constructing a search engine tailored to finding music based on things such as mood, tempo, setting and feel, a game developer is able to make a simple request, and would the best candidate available to select.

Thanks to this disclosure, a game developer is able to continuously update the music that is being played in his game without the need to ship another game executable, which allows higher flexibility when making new games for example.

Even though the invention has been described with reference to one or more embodiments according to the accompanying drawings, it is clear that the invention is not restricted thereto but may be modified in several ways within the scope of the appended claims. All words and expressions should be interpreted broadly, and they are intended to illustrate, not to restrict, the embodiments. It will be obvious to a person skilled in the art that, as technology advances, the inventive concept may be implemented in various ways.

## Claims

1. A method for augmenting a computer program with media content, the method comprising:
executing (200), by a client apparatus, a client application program;
detecting (202) a status of the client application program;
generating (204) a media content request based on the status of the client application program;
obtaining (206), by the client apparatus, media content based the media content request; and
causing the client apparatus to output (208) the media content via a user interface during executing the client application program.

2. The method of claim 1, wherein the generating is performed by the client apparatus, and wherein the obtaining comprises:
sending (600), by the client apparatus, the media content request to a server apparatus; and
receiving (602), by the client apparatus, the media content from the server apparatus.

3. The method of any preceding claim, further comprising:
obtaining (700), by the client apparatus, one or more labels related to the status of the client application program, wherein the one or more labels related to the status of the client application program are included in the media content request;
retrieving (702), by the server apparatus, media content related to the one or more labels; and
transmitting (704), by the server apparatus, the retrieved media content to the client apparatus.

4. The method of claim 3, further comprising:
generating (800) a media content set comprising one or more media content items;
associating (802) the media content set with the one or more labels;
and
selecting (804) the media content from the media content set associated with the one or more labels included in the media content request.

5. The method of claim 4, further comprising:
obtaining (900), by the server apparatus, a license associated with a media content item of the media content set;
determining (902), by the server apparatus, whether the license is valid; and
if the license is determined invalid, excluding (904), by the server apparatus, the media content item from the media content set.

6. The method of any preceding claim, further comprising:
obtaining (1000) a media content identifier related to the status of the client application program, wherein the media content identifier is included in the media content request;
attempting (1002) to retrieve, by the server apparatus, first media content related to the media content identifier, and to transmit, by the server apparatus, the first media content to the client apparatus.

7. The method of claim 6, further comprising:
if the server apparatus fails to retrieve the first media content:
obtaining (1004), by the server apparatus, one or more labels associated with the media content identifier;
retrieving (1006), by the server apparatus, second media content associated with the one or more labels associated with the media content identifier; and
transmitting (1008), by the server apparatus, the second media content to the client apparatus.

8. The method of any preceding claim 6-7, further comprising:
obtaining (1100), by the server apparatus, a license associated with the media content identifier included in the media content request;
determining (1102), by the server apparatus, whether the license is valid; and
if the license is determined invalid, failing (1104) retrieving the first media content.

9. The method of any preceding claim, further comprising:
detecting (1202) a programmatic event during executing the client application program, wherein the programmatic event indicates a change in the status of the client application program; and
triggering (1206) generating the media content request, obtaining the media content, and causing the client apparatus to output the media content based on the programmatic event.

10. The method of claim 9, further comprising:
detecting (1204) the status of the client application program after detecting the programmatic event.

11. The method of claim 9, further comprising:
obtaining (1200) an execution sequence of the client application program, wherein the detecting comprises predicting (1208) the programmatic event on the basis of the execution sequence.

12. The method of any preceding claim, further comprising:
storing the media content on the client apparatus only in a volatile memory (24).

13. A client apparatus (18) comprising one or more processors (10) and one or more memories (20) including computer program code (22), the one or more memories and the computer program code configured to with the one or more processors, cause the client apparatus at least to perform:
executing (200) a client application program;
detecting (202) a status of the client application program;
generating (204) a media content request based on the status of the client application program;
obtaining (206) media content based the media content request; and
causing the client apparatus to output (208) the media content via a user interface during executing the client application program.

14. A system comprising the server apparatus and the client apparatus (18) of claim 13.

15. A computer program product (22) readable by a computer and comprising program instructions which, when executed by the computer, cause the computer to carry out a computer process comprising:
executing (200) a client application program;
detecting (202) a status of the client application program;
generating (204) a media content request based on the status of the client application program;
obtaining (206) media content based the media content request; and
causing the computer to output (208) the media content via a user interface during executing the client application program.
